# EUROPÄISCHE PATENTSCHRIFT

(11) **EP 0 850 363 B1**
(45) Veröffentlichungstag und Bekanntmachung des Hinweises auf die Patenterteilung: **06.11.2002**
(21) Anmeldenummer: 97929286.9
(22) Anmeldetag: 25.06.1997
(51) Int. Cl.: F15B 21/08, F15B 15/28, G01M 3/26

(54) **VERFAHREN UND VORRICHTUNG ZUR BESTIMMUNG VON BETRIEBSPOSITIONEN EINER ARBEITSEINRICHTUNG**
PROCESS AND DEVICE FOR DETERMINING WORKING POSITIONS OF A WORKING DEVICE
PROCEDE ET DISPOSITIF POUR DETERMINER LES POSITIONS DE FONCTIONNEMENT D'UN SYSTEME D'ACTIONNEMENT

(30) Priorität: 15.07.1996 DE 19628221
(43) Veröffentlichungstag der Anmeldung: 01.07.1998
(73) Patentinhaber: FESTO AG & Co, 73734 Esslingen (DE)
(72) Erfinder: STOLL, Kurt, D-73732 Esslingen (DE); STEUDLE, Walter, D-72667 Schlaitdorf (DE)
(74) Vertreter: Abel, Martin, Dipl.-Ing.
(86) Internationale Anmeldenummer: EP9703326
(87) Internationale Veröffentlichungsnummer: WO98002664

(56) Entgegenhaltungen:
- WO-A-97/05395
- DE-A- 4 312 698
- US-A- 5 471 400

## Beschreibung

Die Erfindung betrifft ein Verfahren und eine Vorrichtung zur Bestimmung von Betriebspositionen des durch Zufuhr eines fluidischen Druckmediums zu einer Arbeitsbewegung antreibbaren Bewegungsteils wenigstens einer fluidbetätigten Arbeitseinrichtung.

In Maschinen und Anlagen sind häufig fluidbetätigte Arbeitseinrichtungen enthalten, die die notwendigen Bewegungsabläufe hervorrufen. Am häufigsten werden fluidisch und insbesondere pneumatisch betätigte Arbeitszylinder eingesetzt, mit denen sich je nach Ausgestaltung Linearbewegungen oder Dreh- und Schwenkbewegungen erzeugen lassen. Die jeweilige Arbeitseinrichtung verfügt über ein Bewegungsteil, das sich im Falle eines Arbeitszylinders regelmäßig aus einem verschiebbaren Kolben und eventuell einer daran angeordneten Kolbenstange zusammensetzt. Um das Bewegungsteil zu einer Arbeitsbewegung zu veranlassen, wird es mit unter Druck stehendem fluidischem Druckmedium beaufschlagt. Dieses wird über eine Zufuhrleitung herangeführt, wobei jeder Arbeitseinrichtung ein insbesondere als elektromagnetisch betätigbares Steuerventil ausgebildetes Steuerelement zugeordnet ist, über das der Betriebsablauf einer jeweiligen Arbeitseinrichtung gesteuert werden kann. Ihre Betätigungssignale erhalten die Steuerelemente in der Regel von einer Ablauf-Steuereinrichtung, die vorzugsweise als sogenannte speicherprogrammierbare Steuerung (SPS) ausgebildet ist. Damit diese in der Lage ist, die notwendigen Betätigungssignale zu koordinieren, muß sie allerdings in Abhängigkeit von bestimmten Betriebspositionen der Bewegungsteile der Arbeitseinrichtungen mit Steuersignalen versorgt werden. Dies geschieht bisher unter Verwendung von Sensoren, die am Einsatzort der jeweiligen Arbeitseinrichtung insbesondere unmittelbar an dieser angeordnet sind. Der am häufigsten eingesetzte Sensortyp ist ein unter der Bezeichnung "Reed-Schalter" bekannten Sensor, der beispielsweise am Zylinderrohr eines Arbeitszylinders festlegbar ist und durch einen am Bewegungsteil angeordneten Dauermagneten berührungslos betätigt wird. Derartiges geht beispielsweise aus der DE 43 12 698 A1 hervor.

Ein Nachteil des Standes der Technik ist in dem mit der Erfassung der Betriebspositionen verbundenen Verkabelungs- und Montageaufwand zu sehen. An jeder Arbeitseinrichtung müssen Sensoren plaziert werden, die jeweils über eigene mehradrige Verbindungskabel an die Ablauf-Steuereinrichtung angeschlossen werden müssen. Darüberhinaus bedarf es spezieller Vorbereitungen der Arbeitseinrichtung, beispielsweise der Ausstattung mit Permanentmagneten, um die Sensorik betreiben zu können. Hierbei schlagen nicht nur die Kosten für den Permanentmagneten, sondern auch die Kosten für einen entsprechend komplizierteren Aufbau der Arbeitseinrichtungen zu Buche.

Es ist daher die Aufgabe der vorliegenden Erfindung, ein Verfahren und eine Vorrichtung der eingangs genannten Art zu schaffen, womit sich die Betriebspositionen der Bewegungsteile der Arbeitseinrichtungen mit reduziertem Aufwand sicher erfassen lassen.

Zur Lösung dieser Aufgabe ist bei einem Verfahren der eingangs genannten Art erfindungsgemäß vorgesehen, daß man die Betriebspositionen auf Grundlage des bei der Arbeitsbewegung auftretenden Verbrauches an zugeführtem fluidischem Druckmedium ermittelt.

Mit einem derartigen Verfahren lassen sich die Betriebspositionen der Bewegungsteile fluidbetätigter Arbeitseinrichtungen ohne die bisher übliche dezentrale Positionserfassung mittels geeigneter Sensorschalter bestimmen. Es wurde festgestellt, daß der im Betrieb fluidbetätigter Arbeitseinrichtungen zeitabhängig auftretende Luftverbrauch eine Funktion der stattfindenden Bewegungsabläufe ist und sehr exakte Rückschlüsse auf Betriebspositionen zuläßt. So ergibt sich beispielsweise bei einem fluidbetätigten Arbeitszylinder während des Ausfahrhubes des Bewegungsteils ein annähernd konstanter Druckmediumverbrauch, der bei Erreichen der Endlage stark abfällt, so daß anhand dieser Verbrauchsreduzierung auf das Erreichen der Endlage geschlossen werden kann, ohne auf einen Reed-Schalter oder sonstige am Arbeitszylinder angeordnete Sensoren zurückgreifen zu müssen. Durch Auswertung des während eines Arbeitszyklus auftretenden Luftverbrauches ist somit eine dynamische Erfassung der jeweiligen Betriebspositionen möglich. Durch den Entfall der bisher üblichen Sensorik können überdies die Arbeitseinrichtungen einfacher aufgebaut werden, da beispielsweise bei Arbeitszylindern die zur Betätigung der Sensorschalter benötigten Dauermagnete entfallen können. Desweiteren reduziert sich der Verkabelungs- und Installationsaufwand insbesondere bei Anlagen und Maschinen, die über mehrere Arbeitseinrichtungen verfügen. Hier ist sogar die Möglichkeit gegeben, den Verbrauch an Druckmedium sämtlicher Arbeitseinrichtungen zentral zu erfassen, um dann Rückschlüsse auf die Betriebspositionen der Bewegungsteile sämtlicher Arbeitseinrichtungen zu treffen. Auch kann mit einem entsprechenden Verfahren die Möglichkeit eröffnet werden, die Betriebspositionen aus der Ferne zu überwachen.

Eine zur Durchführung des Verfahrens besonders geeignete Vorrichtung der eingangs genannten Art zeichnet sich dadurch aus, daß eine Messwerte-Erfassungseinrichtung vorhanden ist, die den bei der Arbeitsbewegung auftretenden Verbrauch an zugeführtem fluidischem Druckmedium oder wenigstens eine für diesen Verbrauch charakteristische Meßgröße in Gestalt von Meßwerten zeitabhängig erfaßt, daß eine Speichereinrichtung vorhanden ist, in der eine Referenzwerteaufzeichnung abgespeichert ist, die im zeitlichen Verlauf der Arbeitsbewegung auftretende Verbrauchswerte oder Werte einer für den Verbrach charakteristischen Meßgröße in Gestalt von Referenzwerten enthält, und daß eine Vergleichereinrichtung vorhanden ist, die während des Betriebsablaufes die über die Meßwerte-Erfassungseinrichtung aktuell ermittelten Meßwerte mit den von der Speichereinrichtung bereitgestellten Referenzwerten vergleicht und bei zu vorgegebenen Zeiten vorhandener Werteübereinstimmung Steuersignale für die Arbeitseinrichtung hervorruft.

Die WO-A-97/05395 beschreibt ein Verfahren und eine Vorrichtung zum Testen eines Fluiddruckgerätes. Dabei wird eine Druckkammer evakuiert oder mit Flüssigkeit gefüllt und die sich daraus ergebende Signatur mit gespeicherten Referenzwerten verglichen. Wird eine Abweichung festgestellt, erfolgt die Ausgabe von Steuersignalen für einen Drucker.

Vorteilhafte Weiterbildungen der Erfindung sind in den Unteransprüchen aufgeführt.

Vorzugsweise ermittelt man die Betriebspositionen der Bewegungsteile der Arbeitseinrichtungen auf Grundlage des Momentanverbrauches an zugeführtem Druckmedium. Im Vergleich zu einer Ermittlung auf Grundlage des ab Beginn eines Arbeitszyklus jeweils aufaddierten bzw. integrierten Absolutverbrauches ist hier eine einfachere Auswertung möglich.

Es ist möglich, bei der Ermittlung der Betriebspositionen unmittelbar auf den unter Verwendung entsprechender Meßeinrichtungen erfaßten Druckmediumverbrauch zuzugreifen. Vorzugsweise berücksichtigt man den Druckmediumverbrauch allerdings nur indirekt anhand wenigstens einer Meßgröße, die für den Druckmediumverbrauch charakteristisch ist. So kann man beispielsweise in der Zufuhrleitung eine mit einem Strömungsengpaß versehene Meßstelle vorsehen, die einen Differenzdruck p hervorruft, welcher der nach Bernoulli-Gleichung eine für den Durchfluß charakteristische Meßgröße ist.

In besonders vorteilhafter Ausgestaltung des Verfahrens gibt man eine Referenzwerteaufzeichnung vor, die die im zeitlichen Verlauf der Arbeitsbewegung auftretenden und für den Verbrauch an Druckmedium charakteristischen Werte als zeitlich aufgelöste Referenzwerte enthält. Zweckmäßigerweise liegt die Referenzwerteaufzeichnung in Gestalt einer Referenzkurve vor. Während des Betriebes der mindestens einen Arbeitseinrichtung werden dann in entsprechender zeitlicher Auflösung die aktuellen Meßwerte erfaßt und mit den zu bestimmten Zeiten vorliegenden Referenzwerten der Referenzwerteaufzeichnung verglichen. In Abhängigkeit von auftretenden Übereinstimmungen können dann Steuersignale erzeugt werden, die den zugeordneten Betriebspositionen entsprechen und die dann an Stelle der bisher üblichen Sensorsignale einer Ablauf-Steuereinrichtung zugeführt werden. Hierbei ist von Vorteil, daß der Verkabelungsaufwand erheblich geringer ist und in der Regel ein einziges Verbindungskabel ausreicht.

Um während des Betriebes zum gewünschten Zeitpunkt und somit bei vorbestimmten Betriebspositionen ein entsprechendes Steuersignal zu erhalten, werden in der Referenzwerteaufzeichnung vorzugsweise bestimmte ausgewählte Referenzpunkte oder Referenzbereiche als Steuermarken bzw. Postionsmarkierungen generiert, so daß ein Steuersignal hervorgerufen wird, wenn zur betreffenden Zeit ein Meßwert erfaßt wird, der mit dem vorgegebenen Referenzwert übereinstimmt oder innerhalb des vorgegebenen Referenzbereiches liegt.

Als Referenzwerteaufzeichnung zieht man zweckmäßigerweise eine Meßwerteaufzeichnung heran, die bei einem oder mehreren Test-Betriebsabläufen der mindestens einen Arbeitseinrichtung bzw. der mehrere solche Arbeitseinrichtungen enthaltenden Anlage oder Maschine erfaßt wird. Dies könnte als Teach-in-Erfassung bezeichnet werden. Ergeben sich nach gewisser Betriebsdauer aus irgendwelchen Gründen abweichende Betriebsparameter, kann jederzeit eine neue Referenzwerteaufzeichnung erfaßt werden, um den Verfahrensablauf zu aktualisieren.

Zusammenfassend ermöglicht das erfindungsgemäße Verfahren und die erfindungsgemäße Vorrichtung bei entsprechender Ausgestaltung eine dynamische Erfassung der Positionen mehrerer fluidbetätigter Arbeitseinrichtungen mittels einer zentralen Meßwerte-Erfassungseinrichtung ohne bisher übliche Magnetschalter. Der Aufbau der Arbeitseinrichtungen kann dadurch vereinfacht werden, da beispielsweise bei Arbeitszylindern die Dauermagnete zur Betätigung von Zylinderschaltern entfallen können. Es ist ferner ein Remote Monitoring der Betriebspositionen möglich und man erhält eine erhebliche Reduzierung des Verkabelungs- und Installationsaufwandes. Letztlich ist auch eine Vereinfachung des Aufbaues einer zugeordneten Ablauf-Steuereinrichtung möglich, da die Anzahl der notwendigen Signaleingänge auf ein Minimum reduziert werden kann.

Nachfolgend wird die Erfindung anhand der beiliegenden Zeichnung erläutert. In dieser zeigen:
- Figur 1: eine schematische vereinfachte Darstellung einer zur Durchführung des Verfahrens besonders geeigneten Vorrichtung, und
- Figur 2: eine beispielhafte Referenzwerteaufzeichnung, wie sie im Betrieb der Vorrichtung gemäß Figur 1 Berücksichtigung finden kann.

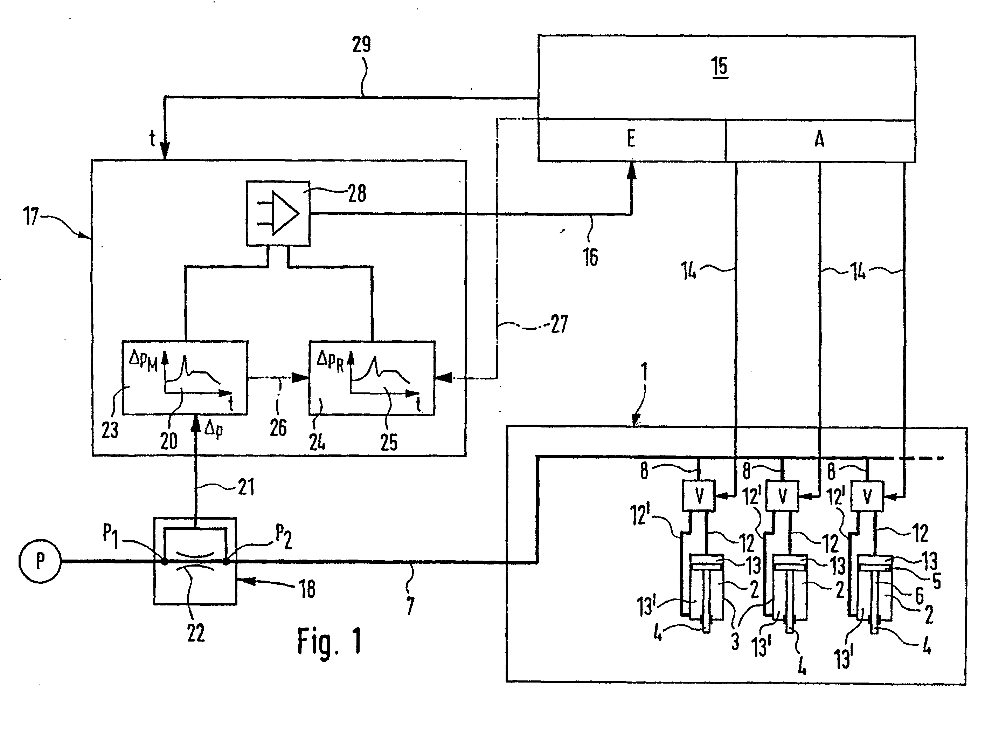

In Figur 1 ist eine schematisch angedeutete Maschine 1 gezeigt, in der beliebige Betriebsabläufe stattfinden. Es kann sich um eine Maschine beispielsweise aus dem Sektor der Fertigungsoder Montagetechnik handeln.

Die Maschine 1 enthält eine Mehrzahl fluidbetätigter Arbeitseinrichtungen 2, von denen in Figur 1 drei Stück exemplarisch angedeutet sind. Bei den beispielsgemäßen Arbeitseinrichtungen 2 handelt es sich um Arbeitszylinder mit einem Gehäuse 3 und einem relativ zu dem Gehäuse bewegbaren Bewegungsteil 4. Das Bewegungsteil 4 bildet das Abtriebsteil einer jeweiligen Arbeitseinrichtung 2. An ihm kann ein nicht näher dargestelltes Bauteil der Maschine 1 befestigt sein, das in einer maschinentypischen Weise verlagert werden soll. Bei einer als Arbeitszylinder ausgebildeten Arbeitseinrichtung 2 ist das Bewegungsteil 4 von einem Kolben 5 und einer daran angebrachten Kolbenstange 6 gebildet, wobei die Kolbenstange 6 bei einem kolbenstangenlosen Linearantrieb auch entfallen kann.

Durch Zufuhr eines fluidischen Druckmediums, vorliegend von Druckluft, kann ein jeweiliges Bewegungsteil 4 zu Arbeitsbewegungen angetrieben werden. Beispielsgemäß sind jeweils zwei derartige Arbeitsbewegungen möglich, wobei das Bewegungsteil 4 zum einen einen Ausfahrhub und zum ändern einen Rückhub ausführt. Die für die Arbeitsbewegung notwendige Energie liefert das fluidische Druckmedium, das den Arbeitseinrichtungen 2 ausgehend von einer Druckmittelquelle P zugeführt wird.

Von der Druckmittelquelle P führt beispielsgemäß eine zentrale Zufuhrleitung 7 zu der Maschine 1, wo sie sämtliche Arbeitseinrichtungen 2 mit dem erforderlichen Druckmedium versorgt. Hierzu zweigen beispielsgemäß von der Zufuhrleitung 7 Zweigleitungen 8 ab, die jeweils zu einem Steuerelement V führen. Bei den Steuerelementen V handelt es sich vorzugsweise um elektromagnetisch betätigte Steuerventile in Mehrwegeausführung. Von jedem Steuerelement V gehen zwei fluidische Steuerleitungen 12, 12' ab, die mit zwei Arbeitsräumen 13, 13' einer jeweiligen Arbeitseinrichtung 2 kommunizieren. Die Arbeitsräume 13, 13' sind durch den Kolben 5 des Bewegungsteils 4 fluiddicht voneinander abgetrennt.

Jedes Steuerelement V kann verschiedene Schaltstellungen einnehmen. Das Umschalten in die gewünschte Schaltstellung wird durch elektrische Betätigungssignale verursacht, die über elektrische Betätigungsleitungen 14 dem jeweiligen, nicht näher dargestellten Antriebsteil des jeweiligen Steuerelements V zugeführt werden. Die beispielsgemäßen Steuerelemente V ermöglichen jeweils zwei Schaltstellungen, in denen wahlweise eine Verbindung zwischen der Zufuhrleitung 7 und der einen der beiden Steuerleitungen 12, 12' hergestellt ist, so daß das Bewegungsteil 4 die jeweils gewünschte Arbeitsbewegung ausführt.

Durch eine fest vorgegebene zeitliche Reihenfolge der Übermittlung der Betätigungssignale an die Steuerelemente V läßt sich ein gewünschter Betriebsablauf der Maschine 1 vorgeben. Dieser Betriebsablauf setzt sich beispielsgemäß aus einer beliebigen Anzahl identischer Arbeitszyklen zusammen, in denen die Arbeitseinrichtungen 2 in aufeinander abgestimmter Weise sich wiederholende Arbeitsbewegungen ausführen. Die hierfür benötigten Betätigungssignale kommen von einer elektronischen Ablauf-Steuereinrichtung 15, die ein Signal-Ausgangsteil A mit einer großen Anzahl von Ausgängen aufweist, an die die Betätigungsleitungen 14 angeschlossen sind. Die Ablauf-Steuereinrichtung 15 ist vorzugsweise eine speicherprogrammierbare Steuerung (SPS), die ein internes, variabel programmierbares Steuerprogramm enthält, das die Betätigungssignale generiert. Damit diese stets zum richtigen Zeitpunkt ausgesandt werden, benötigt die Ablauf-Steuereinrichtung 15 Informationen über die Betriebspositionen der Bewegungsteile 4. Sie erhält diese Informationen in Gestalt von Steuersignalen, die über eine Signalleitung 16 einem Signal-Eingangsteil E der Ablauf-Steuereinrichtung 15 eingespeist werden. Vorzugsweise genügt eine einzige Signalleitung 16 zur Einspeisung der Steuersignale, so daß auch an dem Signal-Eingangsteil E für den Betrieb der Maschine 1 nur ein einziger Eingang benötigt wird. Bei der Signalleitung 16 handelt es sich beispielsweise um ein zweiadriges Kabel.

Die für die Ablauf-Steuereinrichtung bestimmten Steuersignale werden in einer Signalverarbeitungseinrichtung 17 generiert. Hierzu werden Meßwerte herangezogen, die eine Meßwerte-Erfassungseinrichtung 18 gemäß Pfeil 21 liefert.

Es ist vorgesehen, daß immer dann ein elektrisches Steuersignal an die Ablauf-Steuereinrichtung 15 übermittelt wird, wenn ein Bewegungsteil oder eine Mehrzahl von Bewegungsteilen eine vorbestimmte Betriebsposition einnehmen. Über die Meßwerte-Erfassungseinrichtung 18 und die Signalverarbeitungseinrichtung 17 können diese Betriebspositionen relativ einfach auf Grundlage des bei der Arbeitsbewegung der Bewegungsteile 4 auftretenden Verbrauches an über die Zufuhrleitung 7 zugeführtem fluidischem Druckmedium ermittelt werden. Bisher übliche Sensorik, die dezentral an einer jeweiligen Arbeitseinrichtung 2 benötigt wurde, macht diese Maßnahme zumindest größtenteils überflüssig.

Als Grundlage zur Ermittlung der Betriebspositionen wird bei der beispielsgemäßen Vorrichtung der Momentanverbrauch an zugeführtem Druckmedium herangezogen. Hierzu könnte über die Meßwerte-Erfassungseinrichtung 18 unmittelbar der Durchfluß durch die Zufuhrleitung 7 erfaßt werden, also die pro Zeiteinheit zuströmende Menge an Druckmedium. Geeignete Durchfluß-Meßgeräte sind als solches bekannt.

Beim Ausführungsbeispiel erfolgt allerdings keine direkte Berücksichtigung der Durchflußmenge. Vielmehr wird der Druckmediumverbrauch indirekt herangezogen, und zwar anhand einer über die Meßwerte-Erfassungseinrichtung 18 erfaßten und für den Druckmediumverbrauch charakteristischen Meßgröße. Als solche wird in der beispielsgemäßen Meßwerte-Erfassungseinrichtung 18 die Druckdifferenz p ermittelt, die an einer in die Zufuhrleitung 7 eingeschalteten Strömungsengstelle 22 auftritt. Die Strömungsengstelle 22 kann durch einen Engpaß in der Zufuhrleitung 7 hervorgerufen werden, der bewirkt, daß der stromauf auf der der Druckmittelquelle P zugewandten Seite vor der Strömungsengstelle 22 herrschende Druck p₁ größer ist als der nach der Strömungsengstelle herrschende Druck p₂. Gemäß der Bernoullischen Gleichung ist der entstehende Druckabfall p proportional dem Durchfluß, so daß er sich als leicht verarbeitbare Meßgröße empfiehlt.

Die Meßwerte-Erfassungseinrichtung 18 ist gemäß Figur 1 in den Verlauf der Zufuhrleitung 7 eingeschaltet und erfaßt dort als Meßwerte den jeweils momentan herrschenden Druckabfall p. Diese Meßwerte werden gemäß Pfeil 21 der Singalverarbeitungseinrichtung 17 zugeleitet.

Im Betrieb der Vorrichtung werden die derart erfaßten Meßwerte in einem Arbeitsspeicher 23 als Meßwerteaufzeichnung 20 aufgezeichnet. Die Meßwerteaufzeichnung ist vorzugsweise eine Meßkurve und enthält den Verlauf der gemessenen Druckdifferenz p_{M} als Funktion der Zeit t.

Die Signalverarbeitungseinrichtung 17 verfügt des weiteren über eine Speichereinrichtung 24, in der eine Referenzwerteaufzeichnung 25 abgespeichert ist. Bei ihr handelt es sich vorzugsweise um eine Referenzkurve. Sie enthält ebenfalls in zeitlich aufgelöster Form abgespeicherte Referenzwerte einer physikalischen Größe, die derjenigen der in der Meßwerte-Erfassungseinrichtung 18 erfaßten Meßgröße entspricht. Dementsprechend handelt es sich bei den Referenzwerten im vorliegenden Falle ebenfalls um Druckdifferenzwerte, die zur besseren Unterscheidung von den gemessenen Druckdifferenzen als p_{R} bezeichnet seien.

Die Referenzwerteaufzeichnung 25 gibt einen charakteristischen Werteverlauf vor, wie er im Normalbetrieb der Maschine 1 während eines oder mehrerer aufeinanderfolgender Arbeitszyklen in Abhängigkeit von der Betriebsdauer bzw. Zeit auftritt. Die Referenzaufzeichnung 25 wird zweckmäßigerweise vor der tatsächlichen Inbetriebnahme der Maschine 1 in einem oder mehreren Test-Betriebsabläufen durch eine Art Teach-in-Verfahren erstellt. Beim Ausführungsbeispiel geschieht dies dadurch, daß eine im Rahmen eines Test-Betriebsablaufes erstellte Meßwerteaufzeichnung 20 in die Speichereinrichtung 24 übernommen wird, was strichpunktiert durch Pfeil 26 angedeutet ist. Der Befehl zur Aufnahme einer Referenzwerteaufzeichnung 25 kommt beispielsgemäß von der Ablauf-Steuereinrichtung 15, was strichpunktiert durch Pfeil 27 angedeutet ist.

Die Erfassung der Meßwerte wie auch die weitere Auswertung in der Signalverarbeitungseinrichtung 17 erfolgt zeitgesteuert. Hierzu gibt die Ablauf-Steuereinrichtung 15 der Signalverarbeitungseinrichtung 17 über eine interne Uhr gemäß Pfeil 29 einen Zeittakt vor.

Die Signalverarbeitungseinrichtung 17 verfügt des weiteren über eine Vergleichereinrichtung 28, die mit dem Arbeitsspeicher 23 und der Speichereinrichtung 24 verbunden ist. In ihr werden im Normalbetrieb der Vorrichtung die während des Betriebsablaufes über die Meßwerte-Erfassungseinrichtung 18 aktuell ermittelten Meßwerte mit den in der Speichereinrichtung 24 bereitgestellten Referenzwerten verglichen. Der Vergleich erfolgt in zeitlicher Übereinstimmung, so daß gewährleistet ist, daß die Wertevergleiche zwischen den beiderseitigen Aufzeichnungen zum gleichen Zeitpunkt geschehen.

Unter Vermittlung der Vergleichereinrichtung 28 werden in Abhängigkeit von der zu vorgegebenen Zeiten vorliegenden Übereinstimmung zwischen Meßwerten und Referenzwerten Steuersignale erzeugt, die insbesondere in serieller Siganlübertragung über die Signalleitung 16 dem Signal-Eingangsteil E der Ablauf-Steuereinrichtung 15 zugeführt werden. Beispielsweise unter Berücksichtigung der zeitlichen Abfolge der empfangenen Steuersignale ist die Ablauf-Steuereinrichtung in der Lage, die Steuerelemente V der Maschine 1 zuordnungsrichtig und zum richtigen Zeitpunkt nacheinander oder zu mehreren gleichzeitig anzusteuern.

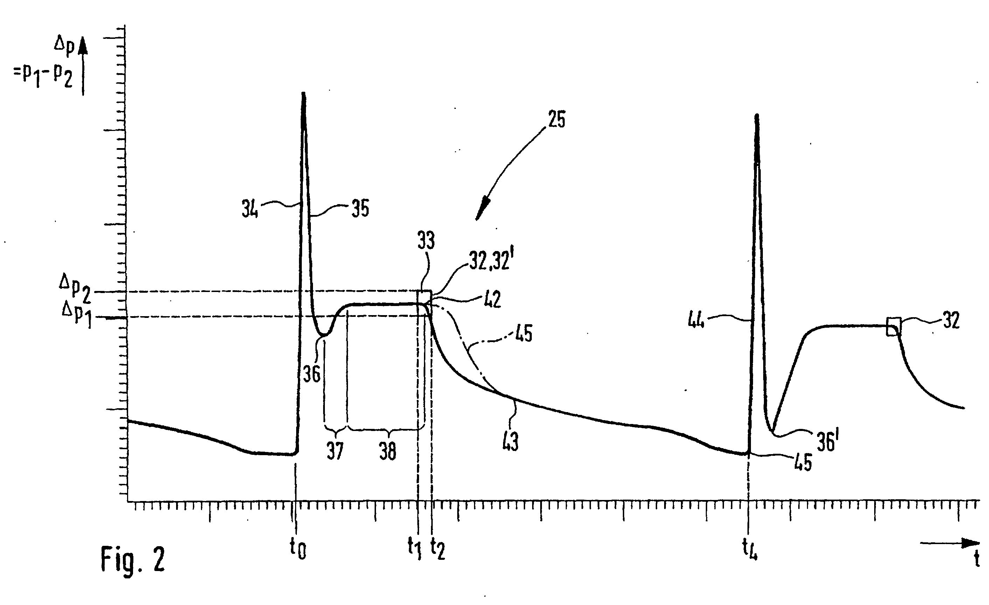

Zur exakten Vorgabe des Zeitpunktes der Erzeugung der Steuersignale ist zweckmäßigerweise vorgesehen, daß bestimmte ausgewählte Referenzpunkte oder Referenzbereiche der Referenzwerteaufzeichnung 25 als Positionsmarkierungen 32 generiert bzw. markiert werden. Diese Positionsmarkierungen 32 sind beispielhaft in der in Figur 2 vergrößert dargestellten Referenzwerteaufzeichnung 25 eingetragen.

Stellt die Vergleichereinrichtung 28 im Betrieb der Vorrichtung die Übereinstimmung eines zu einer bestimmten Zeit gemessenen Meßwertes mit dem auf eine Postitionsmarkierung 32 fallenden Referenzpunkt der Referenzwerteaufzeichnung fest, wird ein Steuersignal erzeugt. Hierbei können für den Vergleich durchaus gewisse Fenster bzw. Bereiche vorgegeben werden, innerhalb denen ein Meßpunkt zu liegen hat, damit ein Steuersignal erzeugt wird.

Zur besseren Erläuterung ist in Figur 2 eine der eingetragenen Positionsmarkierungen 32, 32' näher aufgeschlüsselt. Sie markiert einen Referenzbereich 33, der durch einen Zeitbereich t₁-t₂ und einen Differenzdruckbereich p₂- p₁ definiert ist. Hier wird ein Steuersignal erzeugt, wenn zu einem zwischen den Zeiten t₁ und t₂ liegenden Zeitpunkt ein Differenzdruck gemessen wird, der zwischen den Differenzdrücken p₂ und p₁ liegt. Die Definition von Bereichen ist zweckmäßig, um geringfügigen Meßabweichungen Rechnung zu tragen. Die Betriebsgenauigkeit ist allerdings um so größer, je kleiner die Referenzbereiche gewählt werden.

Zur Verdeutlichung der Aussagefähigkeit des Durchflußverhaltens in Bezug auf die stattfindenden Bewegungsabläufe sei kurz die Referenzwerteaufzeichnung 25 gemäß Figur 2 näher beleuchtet. Sie zeigt den Referenzwerteverlauf p über der Zeit t, wie er sich bei Betätigung einer der als Arbeitszylinder ausgebildeten Arbeitseinrichtungen 2 darstellt.

Es sei zunächst davon ausgegangen, daß das Bewegungsteil 4 der betreffenden Arbeitseinrichtung 2 sich in eingefahrener Stellung befindet. Nun wird das Steuerelement V derart angesteuert, daß es eine Zuströmung des Druckmediums in den einen Arbeitsraum 13 ermöglicht. Der Zeitpunkt t₀ gibt den Öffnungszeitpunkt des Ventils wieder, wobei der sich unmittelbar anschließende hohe p-Ausschlag einen zunächst hohen Durchfluß erkennen läßt (Kurvenabschnitt 34), der damit zusammenhängt, daß der noch leere Arbeitsraum 13 und die zugehörige, zuvor entlüftete Steuerleitung 12 mit Druckmedium befüllt wird. Im anschließenden Kurvenabschnitt 35 sinkt der Durchfluß mit zunehmendem Druckaufbau in der Steuerleitung 12 und dem angeschlossenen Arbeitsraum 13, bis an einem Tiefpunkt 36 der Losbrechdruck erreicht ist, bei dem sich das Bewegungsteil 4 in Bewegung setzt. Es schließt sich eine Beschleunigungsphase 37 an, bei der der Durchfluß und somit der p-Wert allmählich wieder ansteigt, bis die stationäre Hubphase 38 erreicht ist, während derer sich das Bewegungsteil 4 mit annähernd konstanter Geschwindigkeit bis zum Erreichen der Endlage fortbewegt. Das Erreichen der Endlage ist an dem Knickpunkt 42 zu erkennen, der den Übergang zwischen der stationären Hubphase 38 und einem abfallenden Kurvenabschnitt 43 markiert. Der abfallende Kurvenabschnitt 43 resultiert daraus, daß sich im Arbeitsraum 13 allmählich der gesamte anstehende Arbeitsdruck aufbaut, nachdem während der stationären Hubphase 38 ein etwas geringereres Druckniveau vorlag. In den Knickpunkt 42 wurde eine der oben erwähnten Positionsmarkierungen 32 gelegt, da sie die Beendigung der Arbeitsbewegung des Ausfahrhubes wiedergibt.

Zu einem beliebigen Zeitpunkt t₄ wird das Steuerelement V umgesteuert, um die Rückhub-Arbeitsbewegung zu erzeugen. Dies ist mit einem erneuten starken Durchflußanstieg und einem entsprechenden Anstieg der Differenzdruckwerte verbunden, was der ansteigende Kurvenabschnitt 44 vermittelt. Nun schließt sich ein dem vorausgehenden Kurvenverlauf vergleichbarer Kurvenverlauf an, wobei allerdings der Tiefpunkt 36' bei einem niedrigeren Durchfluß angesiedelt ist, weil die Druckdifferenz infolge des höheren Gegendruckes der noch gefüllten Arbeitskammer 13 geringer ist.

Ein besonderer Vorteil der beispielsgemäßen Ausgestaltung besteht darin, daß durch die zentrale Meßwerterfassung über die Meßwerte-Erfassungseinrichtung 18 die Betriebspositionen sämtlicher Bewegungsteile aller an die Zufuhrleitung 7 angeschlossenen Arbeitseinrichtungen 2 bestimmbar sind. Sind beispielsweise mehrere Arbeitseinrichtungen 2 gleichzeitig in Betrieb, so hat dies ebenfalls einen charakteristischen Werteverlauf zur Folge, so daß bei einer durch die Vergleichereinrichtung 28 festgestellten Werteübereinstimmung das dann erzeugte Steuersignal über die Ablauf-Steuereinrichtung 15 auch die Betätigung mehrerer Steuerelemente V hervorrufen kann.

Sollte sich die Notwendigkeit zu einer Veränderung des Betriebsablaufes der Arbeitseinrichtungen 2 ergeben, kann dem sehr einfach durch Neuaufnahme einer aktualisierten Referenzwerteaufzeichnung Rechnung getragen werden. Es kann sich während des Betriebes der Maschine beispielsweise herausstellen, daß ein Bewegungsteil 4 hinsichtlich des Aufpralls bei Erreichen der Hubendlage fluidisch stärker gedämpft werden muß. Dem kann Rechnung getragen werden, indem man das abströmseitig ausströmende Druckmedium stärker drosselt. Die anschließend erfaßte Referenzwerteaufzeichnung reagiert auf eine derart geänderte Einstellung mit dem in Figur 2 strichpunktiert eingetragenen Kurvenverlauf 45, wobei sich der Differenzdruck bei Annäherung an die Endlage weniger schnell abbaut. Nimmt man nach Vornahme der Einstellungen eine neuerliche Aufnahme der Referenzwerteaufzeichnung vor, ergibt sich eine Kurve, die den vorgenannten, weniger steil abfallenden Abschnitt 45 aufweist und bei den nachfolgenden Meßwertvergleichen wird dieser Ist-Zustand herangezogen.

Durch die erfindungsgemäße Ausgestaltung ist auch an solchen Arbeitseinrichtungen 2 eine einfache Positionsbestimmung möglich, die aufgrund geringer Baugröße bisher das Anbringen konventioneller Sensorik nicht ermöglichten.

## Patentansprüche

1. Verfahren zur Bestimmung von Betriebspositionen des durch Zufuhr eines fluidischen Druckmediums zu einer Arbeitsbewegung antreibbaren Bewegungsteils (4) wenigstens einer fluidbetätigten Arbeitseinrichtung (2), **dadurch gekennzeichnet, daß** man die Betriebspositonen auf Grundlage des bei der Arbeitsbewegung auftretenden Verbrauches an zugeführtem fluidischem Druckmedium ermittelt.

2. Verfahren nach Anspruch 1, **dadurch gekennzeichnet, daß** man als Grundlage zur Ermittlung der Betriebspositionen den Momentanverbrauch an zugeführtem Druckmedium heranzieht.

3. Verfahren nach Anspruch 1 oder 2, **dadurch gekennzeichnet, daß** man den Druckmediumverbrauch anhand wenigstens einer für den Druckmediumverbrauch charakteristischen Meßgröße berücksichtigt.

4. Verfahren nach Anspruch 3, **dadurch gekennzeichnet, daß** man als Meßgröße den Durchfluß, d.h. die pro Zeiteinheit zuströmende Menge an Druckmedium, heranzieht.

5. Verfahren nach Anspruch 3 oder 4, **dadurch gekennzeichnet, daß** man als für den Druckmediumverbrauch charakteristische Meßgröße den an einer mit einem Strömungsengpaß (22) versehenen Meßstelle einer vom zugeführten Druckmedium durchströmten Zufuhrleitung (7) gemessenen Differenzdruck p heranzieht.

6. Verfahren nach einem der Ansprüche 1 bis 5, **dadurch gekennzeichnet, daß** man eine Referenzwerteaufzeichnung (25) insbesondere in Gestalt einer Referenzkurve vorgibt, die im zeitlichen Verlauf der Arbeitsbewegung des Bewegungsteils (4) mindestens einer Arbeitseinrichtung (2) auftretende und für den Verbrauch an Druckmedium charakteristische Werte als in Abhängigkeit vom zeitlichen Verlauf aufgezeichnete Referenzwerte enthält, mit denen während des Betriebes der wenigstens einen Arbeitseinrichtung (2) aktuell zeitabhängig ermittelte Meßwerte verglichen werden, um in Abhängigkeit von der zu vorgegebenen Zeiten vorliegenden Übereinstimmung zwischen Meßwerten und Referenzwerten Steuersignale zu erzeugen.

7. Verfahren nach Anspruch 6, **dadurch gekennzeichnet, daß** man als Referenzwerteaufzeichnung (25) die bei einem oder mehreren Test-Betriebsabläufen erfaßte Meßwerteaufzeichnung (20) heranzieht.

8. Verfahren nach Anspruch 6 oder 7, **dadurch gekennzeichnet, daß** man die Meßwerte in Gestalt einer als Funktion des zeitlichen Verlaufes aufgezeichneten Meßkurve erfaßt.

9. Verfahren nach einem der Ansprüche 6 bis 8, **dadurch gekennzeichnet, daß** bestimmte ausgewählte Referenzpunkte oder Referenzbereiche (33) der Referenzwerteaufzeichnung (25) als Positonsmarkierungen (32) markiert werden, derart, daß beim Auftreten zeitabhängig übereinstimmender Meßwerte ein Steuersignal hervorgerufen wird.

10. Verfahren nach einem Ansprüche 6 bis 9, **dadurch gekennzeichnet, daß** man die Steuersignale in serieller Signalübertragung dem Signal-Eingangsteil (E) einer Ablauf-Steuereinrichtung (15) zuführt, in der als Betätigungssignale dienende Ausgangssignale generiert werden, die zu einzelnen Schaltelementen (V) geführt werden, die in Abhängigkeit von den Betätigungssignalen die Druckmedium-Zufuhr zu den vorhandenen Arbeitseinrichtungen (2) steuern.

11. Verfahren nach einem der Ansprüche 1 bis 10., **dadurch gekennzeichnet**, t daß die Betriebspositionen der Bewegungsteile (4) mehrerer Arbeitseinrichtungen (2) auf Grundlage des zentral erfaßten Gesamtverbrauches an Druckmedium dieser Arbeitseinrichtungen (2) ermittelt werden.

12. Verfahren nach einem der Ansprüche 1 bis 11 zur Verwendung bei der Steuerung des Betriebsablaufes von Maschinen oder Anlagen (1), die mehrere fluidbetätigte Antriebseinrichtungen (2) enthalten.

13. Vorrichtung zur Bestimmung von Betriebspositionen des durch Zufuhr eines fluidischen Druckmediums zu einer Arbeitsbewegung antreibbaren Bewegungsteils (4) wenigstens einer fluidbetätigten Arbeitseinrichtung (2), **dadurch gekennzeichnet, daß** eine Meßwerte-Erfassungseinrichtung (18) vorhanden ist, die den bei der Arbeitsbewegung auftretenden Verbrauch an zugeführtem fluidischem Druckmedium oder wenigstens eine für diesen Verbrauch charakteristische Meßgröße in Gestalt von Meßwerten zeitabhängig erfaßt, daß eine Speichereinrichtung (24) vorhanden ist, in der eine Referenzwerte auf Zeichnung (25) abgespeichert ist, die im zeitlichen Verlauf der Arbeitsbewegung auftretende Verbrauchswerte oder Werte einer für den Verbrauch charakteristischen Meßgröße in Gestalt von Referenzwerten enthält, und daß eine Vergleichereinrichtung (28) vorhanden ist, die während des Betriebsablaufes die über die Meßwerte-Erfassungseinrichtung (18) aktuell ermittelten Meßwerte mit den von der Speichereinrichtung (24) bereitgestellten Referenzwerten vergleicht und bei zu vorgegebenen Zeiten vorhandener Werteübereinstimmung Steuersignale für die Arbeitseinrichtung (2) hervorruft.

14. Vorrichtung nach Anspruch 13, **dadurch gekennzeichnet, daß** eine Ablauf-Steuereinrichtung (15) vorhanden ist, deren Signal-Ausgangsteil (A) mit Steuerelementen (V) verbunden ist, die zur Steuerung der Druckmedium-Zufuhr behzüglich mehrerer Arbeitseinrichtungen (2) dienen und deren Siganl-Eingangsteil (E) die unter Vermittlung der Vergleichereinrichtung (28) hervorgerufenen Steuersignale zugeführt werden.

## Claims

1. Method for determining operating positions of the moving part (4) of one or more fluid-actuated operating devices (2) which may be driven to perform an operating movement through the admission of a fluidic pressure medium, **characterised in that** the operating positions are determined on the basis of the consumption of supplied fluidic pressure medium occurring during the operating movement.

2. Method according to claim 1, **characterised in that** the momentary consumption of supplied pressure medium is used as the basis for determining the operating positions.

3. Method according to claim 1 or 2, **characterised in that** the pressure medium consumption is taken into account with the aid of one or more measured quantities characteristic of pressure medium consumption.

4. Method according to claim 3, **characterised in that** the flow, i.e. the amount of pressure medium flowing per unit of time, is used as the measured quantity.

5. Method according to claim 3 or 4, **characterised in that** the difference in pressure p measured at a measuring point, provided with a flow constrictor (22), of a supply line (7) through which supplied pressure medium flows, is used as the measured quantity characteristic of pressure medium consumption.

6. Method according to any of claims 1 to 5, **characterised in that** a reference value record (25), in particular in the form of a reference curve, is preset and contains values occurring over the course of time of the operating movement of the moving part (4) of one or more operating devices (2) and characteristic for the consumption of pressure medium as reference values recorded over the course of time, with which current measured values determined on a time basis during operation of the operating device (2) or devices may be compared, in order to generate control signals based on the coincidence between measured values and reference values existing at preset times.

7. Method according to claim 6, **characterised in that** the measured value record (20) obtained during one or more test operating sequences is used as the reference value record (25).

8. Method according to claim 6 or 7, **characterised in that** the measured values are recorded in the form of a measurement curve plotted as a function of the course of time.

9. Method according to any of claims 6 to 8, **characterised in that** certain selected reference points or reference zones (33) of the reference value record (25) are marked as position marks (32) in such a way that a control signal is generated when time-dependent measured values coincide.

10. Method according to any of claims 6 to 9, **characterised in that** the control signals are supplied by serial signal transmission to the signal input section (E) of a sequence control unit (15) in which are generated the output signals used as actuating signals, which are fed to individual control elements (V) which control the pressure medium supply to the existing operating devices (2) on the basis of the actuating signals.

11. Method according to any of claims 1 to 10, **characterised in that** the operating positions of the moving parts (4) of several operating devices (2) are determined on the basis of the centrally recorded overall consumption of pressure medium of these operating devices (2).

12. Method according to any of claims 1 to 11 for use in the control of the operating sequence of machines or equipment (1) containing several fluid-actuated operating devices (2).

13. Device for determining operating positions of the moving part (4) of one or more fluid-actuated operating devices (2) which may be driven to perform an operating movement through the admission of a fluidic pressure medium, **characterised in that** there is a measured value logger (18) which records in the form of time-based measured values the consumption of supplied fluidic pressure medium occurring during the operating movement or at least a measured quantity characteristic of this consumption, that there is a memory unit (24) in which is stored a reference value record (25) which contains, in the form of reference values, consumption values occurring over the course of time of the operating movement or values of a measured quantity characteristic of the consumption, and that there is a comparator (28) which compares current measured values determined during the operating sequence via the measured value logger (18) with the reference values supplied by the memory unit (24), and generates control signals for the operating device (2) when values coincide at preset times.

14. Device according to claim 13, **characterised in that** there is a sequence control unit (15), the signal output section (A) of which is linked to control elements (V) used to control the pressure medium supply relating to several operating devices (2), and the signal input section (E) of which receives the control signals generated through the agency of the comparator (28).

## Revendications

1. Procédé de détermination des positions de service d'un élément de mouvement (4), qui peut être conduit à un mouvement de travail par application d'un agent fluide pressurisé, d'au moins un dispositif de travail (2) actionné par fluide, **caractérisé en ce que** l'on détermine les positions de service à partir de la consommation d'agent fluide pressurisé apporté au cours du mouvement de travail.

2. Procédé selon la revendication 1, **caractérisé en ce que**, pour déterminer les positions de service, on utilise la consommation momentanée d'agent pressurisé apporté.

3. Procédé selon la revendication 1 ou 2, **caractérisé en ce qu'**on tient compte de la consommation en agent pressurisé à l'aide d'au moins une grandeur de mesure caractéristique de la consommation d'agent pressurisé.

4. Procédé selon la revendication 3, **caractérisé en ce que**, comme grandeur de mesure, on utilise le débit, c'est-à-dire la quantité d'agent pressurisé s'écoulant par unité de temps.

5. Procédé selon la revendication 3 ou 4, **caractérisé en ce que**, comme grandeur de mesure caractéristique de la consommation d'agent pressurisé, on utilise la différence de pression p mesurée en un point de mesure muni d'un étranglement d'écoulement (22) d'une conduite d'alimentation (7) traversée par l'agent pressurisé apporté.

6. Procédé selon l'une des revendications 1 à 5, **caractérisé en ce qu'**on impose un enregistrement de valeurs de référence (25) en particulier de la forme d'une courbe de référence qui contient, comme valeurs de référence enregistrées en fonction de l'évolution temporelle, des valeurs apparaissant pendant l'évolution temporelle du mouvement de travail de l'élément de mouvement (4) d'au moins un dispositif de travail (2) et caractéristiques de la consommation en agent pressurisé, avec lesquelles on compare des valeurs de mesure déterminée au cours du temps pendant le fonctionnement du dispositif de travail (2) au nombre d'au moins un, afin de produire des signaux de commande en fonction de la coïncidence entre valeurs de mesure et valeurs de référence présente à certains instants prédéterminés.

7. Procédé selon la revendication 6, **caractérisé en ce qu'**on utilise comme enregistrement de valeurs de référence (25) l'enregistrement de valeurs de mesure (20) réalisé pendant un ou plusieurs essais de fonctionnement.

8. Procédé selon la revendication 6 ou 7, **caractérisé en ce qu'**on détermine les valeurs de mesure sous la forme d'une courbe de mesure enregistrée en fonction de l'évolution temporelle.

9. Procédé selon l'une des revendications 6 à 8, **caractérisé en ce que** certains points de référence ou plages de référence sélectionnés (33) de l'enregistrement de valeurs de référence (25) sont repérées en tant que marquages de position (32), de telle manière qu'un signal de commande est produit dans le cas de valeurs de mesure coïncidentes en fonction du temps.

10. Procédé selon l'une des revendications 6 à 9, **caractérisé en ce que** l'on envoie les signaux de commande par une transmission de signaux en série à la partie d'entrée de signaux (E) d'un dispositif de commande de processus (15), dans lequel sont générés des signaux de sortie servant de signaux d'actionnement, qui sont envoyés à différents éléments de commutation (V), qui commandent en fonction des signaux de commande l'alimentation en agent pressurisé des dispositifs de travail (2) présents.

11. Procédé selon l'une des revendications 1 à 10, **caractérisé en ce que** les positions de service des éléments de mouvement (4) de plusieurs dispositifs de travail (2) sont déterminées à partir de la consommation total d'agent pressurisé de ces dispositifs de travail (2) déterminée de manière centrale.

12. Procédé selon l'une des revendications 1 à 11 destiné à une utilisation lors de la commande des états de service de machines ou installations (1) comprenant plusieurs dispositifs d'entraînement (2) actionnés par fluide.

13. Dispositif de détermination des positions de service d'un élément de mouvement (4), qui peut être conduit à un mouvement de travail par application d'un agent fluide pressurisé, d'au moins un dispositif de travail (2) actionné par fluide, **caractérisé en ce qu'**un dispositif (18) de relevé de valeurs de mesure est présent qui détermine en fonction du temps la consommation d'agent fluide pressurisé apporté lors du mouvement de travail ou au moins une grandeur de mesure caractéristique de cette consommation sous la forme de valeurs de mesure, **en ce qu'**un dispositif d'enregistrement est présent, dans lequel est enregistré un enregistrement de valeurs de référence (25) qui contient des valeurs de consommation apparaissant dans l'évolution temporelle du mouvement de travail ou des valeurs d'une grandeur de mesure caractéristique de la consommation sous la forme de valeurs de référence, et **en ce qu'**un dispositif comparateur (28) est présent, qui compare pendant le fonctionnement les valeurs de mesure déterminée par le dispositif (18) de détermination de valeurs de mesure avec les valeurs de référence fournies par le dispositif d'enregistrement (24) et produit des signaux de commande pour le dispositif de travail (2) en cas de coïncidence de valeurs à des instants prédéterminés.

14. Dispositif selon la revendication 13, **caractérisé en ce qu'**un dispositif de commande de processus (15) est présent, dont la partie de sortie de signaux (A) est reliée à des éléments de commande (V) qui servent à commander l'alimentation en agent pressurisé de plusieurs dispositifs de travail (2) et donc la partie d'entrée de signaux (E) reçoit les signaux de commande produits par l'intermédiaire du dispositif comparateur (28).
